(19) Europäisches Patentamt
European Patent Office
Office européen des brevets

(11) Veröffentlichungsnummer: **0 218 935**
**A1**

(12) # EUROPÄISCHE PATENTANMELDUNG

(21) Anmeldenummer: 86112755.3

(22) Anmeldetag: 16.09.86

(51) Int. Cl.⁴: **A01N 43/80**

(30) Priorität: 26.09.85 DE 3534231

(43) Veröffentlichungstag der Anmeldung: 22.04.87 Patentblatt 87/17

(84) Benannte Vertragsstaaten: BE DE FR GB IT NL SE

(71) Anmelder: BAYER AG
Konzernverwaltung RP Patentabteilung
D-5090 Leverkusen 1 Bayerwerk(DE)

(72) Erfinder: Reinecke, Paul, Dr.
Steinstrasse 8
D-5090 Leverkusen 3(DE)
Erfinder: Heinrich, Günter, Dr.
Am Mittelberg 21
D-5090 Leverkusen 1(DE)

(54) **Saatgutbeizmittel auf Basis von Saccharin oder Saccharin-Alkalimetallsalzen.**

(57) Verwendung von Saccharin oder dessen Alkalimetallsalzen der Formel (I)

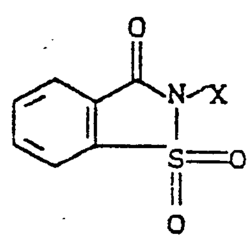

(I)

in welcher

X für Wasserstoff oder ein Alkalimetallkation steht,

als Saatgutbeizmittel für Getreide.

EP 0 218 935 A1

## Saatgutbeizmittel auf Basis von Saccharin oder Saccharin-Alkalimetallsalzen

Die Erfindung betrifft die Verwendung von Saccharin oder Saccharin-Alkalimetallsalzen als Saatgutbeizmittel für Getreide.

Es ist bereits bekannt, daß Saccharin, dessen Salze oder auch dessen Derivate insbesondere bei der Bekämpfung bestimmter Pilzerkrankungen in tropischen und subtropischen Kulturen wie Reis oder Citrus gute fungizide Eigenschaften besitzen - (vgl. z.B. Jap. Pat. 53/6642: Jap. Pat. 48/ 22 624 und Jap. Pat. 48/22 626).

Die Anwendung erfolgt hierbei in der Regel entweder durch Spritzen von gefährdeten und/oder befallenen Pflanzen (Jap. Pat. 49/109 535) oder durch Behandlung des Kulturmediums Boden (bzw. bei bestimmten (sub)tropischen Kulturen wie beispielsweise Reis auch durch Behandlung des Wassers mit welchen die Kulturen überschwemmt werden) mit Spritzmitteln (Jap. Pat. 47/9428 oder Jap. Pat. 52/110 830) oder mit Granulaten (Jap. Pat. 48/5963 oder Jap. Pat. 22 625).

Bei diesen Anwendungsarten sind erhebliche Aufwandmengen erforderlich und es gelingt nicht immer, alle Infektionsherde zu erfassen und die Ausbreitung der Krankheiten zu verhindern. Auch ist das Ausbringen der Pflanzenbehandlungsmittel bei der Bewirtschaftung größerer Flächen mühsam, zeit-und kostenintensiv.

Weiterhin ist bekannt, daß zur wirkungsvollen und einfachen Krankheitsbekämpfung insbesondere im Getreideanbau die Saatgutbeizung ein kostengünstiges Verfahren darstellt, welches nur geringe Aufwandmengen erfordert und in einem einfachen Arbeitsgang vor der Aussaat der Kulturen durchgeführt werden kann.

Einschränkend muß jedoch bei derartigen Beizverfahren berücksichtigt werden, daß nicht alle in Spritzversuchen wirksamen Fungizide für diese Behandlungsart in Frage kommen, da einerseits gewährleistet sein muß, daß das Fungizid in ausreichendem Maße an dem Saatgut haften bleibt oder im Idealfall sogar durch die Samenhüllen und Wurzeln in die Pflanze hinein penetrieren kann, so daß der Schutz gegen Pilzerkrankungen über die Keimphase hinaus anhält, und daß außerdem nicht durch die am Saatgut bzw. Keimling lokal auftretenden sehr hohen Fungizid-Konzentrationen Pflanzenschäden hervorrufen werden, eine Gefahr, die gerade in der sehr sensiblen Keimungsphase der Pflanzen besonders groß ist (vgl. z.B. R. Wegler "Chemie der Pflanzenschutz-und Schädlingsbekämpfungsmittel", Band 2, S. 12ff, Springer Verlag, Berlin, Heidelberg, New York 1970). Eine Saatgutbeizung mit Saccharin oder dessen Derivaten ist bisher nicht bekannt.

Schließlich ist bekannt, daß 3-Allyloxy-benzo-[d]-1,2-thiazol-1,1-dioxid gute fungizide Eigenschaften besitzt (vgl. z.B. US-PS 3 629 428).

Die Wirksamkeit dieser vorbekannten Verbindung ist jedoch insbesondere bei niedrigen Aufwandmengen und -konzentrationen nicht immer in allen Anwendungsgebieten völlig zufriedenstellend.

Es wurde nun gefunden, daß Saccharin oder dessen Alkalimetall-Salze der Formel (I),

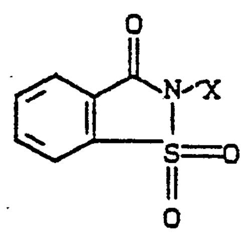

(I)

in welcher

X für Wasserstoff oder ein Alkalimetallkation, wie z.B. Natrium oder Kalium, steht,

sich besonders gut zur Verwendung als Saatgutbeizmittel für Getreide eignen.

Überraschenderweise zeigen die erfindungsgemäß verwendbaren Verbindungen der Formel (I) eine erheblich bessere fungizide Wirksamkeit beim Einsatz als Getreidesaatgutbeizmittel als das aus dem Stand der Technik bekannte 3-Allyloxy-benzo-[d]-1,2-thiazol-1,1-dioxid, welches eine chemisch sehr naheliegende Verbindung ist.

Die erfindungsgemäß verwendbaren Verbindungen sind durch die Formel (I) allgemein definiert. Bevorzugt verwendet man Verbindungen der Formel (I), bei welcher X für Wasserstoff oder ein Natriumkation steht.

Die erfindungsgemäß verwendbaren Verbindungen der Formel (I) sind allgemein bekannte

Verbindungen der organischen Chemie und herstellbar nach allgemein bekannten Verfahren.

Die erfindungsgemäß verwendbaren Wirkstoffe weisen eine starke mikrobizide Wirkung auf und können zur Bekämpfung von unerwünschten Mirkoorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Bakterizide Mittel werden im Pflanzenschutz zur Bekämpfung von Pseudomonadaceae, Rhizobiaceae, Enterobacteriaceae, Corynebacteriaceae und Streptomacetaceae eingesetzt.

Beispielhaft aber nicht begrenzend seien einige Erreger von pilzlichen und bakteriellen Erkrankungen, die unter die oben aufgezählten Oberbegriffe fallen, genannt:

Xanthomonas-Arten wie beispielsweise Xanthomonas translucens; Pseudomonas-Arten wie beispielsweise Pseudomonas striafaciens: Erwinia-Arten wie beispielsweise Erwinia stewartii: Pythium-Arten wie beispielsweise Pythium ultimum; Sclerospora-Arten wie beispielsweise Sclerospora maydis:

Erysiphe-Arten, wie beispielsweise Erysiphe graminis:

Pyrenophora-Arten, wie beispielsweise Pyrenophora teres oder P. graminea

(Konidienform: Drechslera, Syn: Helminthosporium);

Cochliobolus-Arten, wie beispielsweise Cochliobolus sativus (Konidienform: Drechslera, Syn: Helminthosporium);

Puccinia-Arten, wie beispielsweise Puccinia recondita:

Tilletia-Arten, wie beispielsweise Tilletia caries:

Ustilago-Arten, wie beispielsweise Ustilago nuda oder Ustilago avenae:

Fusarium-Arten, wie beispielsweise Fusarium culmorum:

Botrytis-Arten, wie beispielsweise Botrytis cinerea;

Septoria-Arten, wie beispielsweise Septoria nodorum:

Leptosphaeria-Arten, wie beispielsweise Leptosphaeria nodorum:

Cercospora-Arten, wie beispielsweise Cercospora sorghi:

Alternaria-Arten, wie beispielsweise Alternaria alternata:

Pseudocercosporella-Arten, wie beispielsweise Pseudocercosporella herpotrichoides.

Die erfindungsgemäß verwendbaren Wirkstoffe lassen sich mit besonders gutem Erfolg zur Bekämpfung von Krankheiten des Getreides der gemäßigten Temperaturzonen der Erde wie beispielsweise Hafer, Roggen, Weizen oder Gerste einsetzen.

Bevorzugt verwendet man sie zur Bekämpfung von Mehltauarten wie beispielsweise gegen den Erreger des echten Getreidemehltaus (Erysiphe graminis) oder zur Bekämpfung des Erregers der Streifenkrankheit der Gerste (Pyrenophora graminea) sowie auch zur Bekämpfung von Peronospora-und anderen Oomyceten-Arten.

Dabei zeigen die erfindungsgemäß verwendbaren Wirkstoffe auch sehr gute systemische Wirksamkeit.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur-und synthetische Stoffe, Feinstverkapselungen in polymeren Stoffen und in Hüllmassen für Saatgut.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser: mit verflüssigten gasförmigen Streckmitteln oder Trägerstoffen sind

solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid: als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate: als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokonußschalen, Maiskolben und Tabakstengel: als Emulgier und/oder -schaumerzeugende Mittel kommen in Frage: z.B. nichtionogene und anionische Emulgatoren, wie Polyoxyethylen-Fettsäure-Ester, Polyoxyethyllen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymers verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen wie gebrauchsfertige Lösungen, Emulsionen, Suspensionen, Pulver, Pasten und Granulate angewendet werden. Die Anwendung geschieht in üblicher Weise, z.B. durch Trockenbeizen, Feuchtbeizen, Naßbeizen, Schlämmbeizen, Inkrustieren oder Pillieren.

Bei der Saatgutbehandlung werden im allgemeinen Wirkstoffmengen von 0,001 bis 50 g je Kilogramm Saatgut, vorzugsweise 0,01 bis 10 g benötigt.

Anwendungsbeispiel

In dem folgenden Anwendungsbeispiel wurde die nachstehend aufgeführte Verbindung als Vergleichssubstanz eingesetzt:

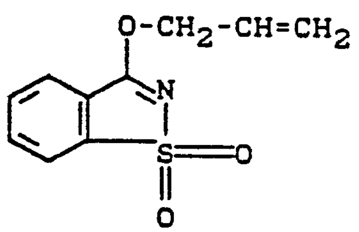

(A)

3-Allyloxy-benzo[d]-1,2-thiazol-1,1-dioxid (bekannt aus US-PS 3 629 428)

Beispiel A

Erysiphe-Test (Gerste) / Saatgutbehandlung

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das Saatgut 3 Minuten lang mit dem Beizmittel in einer verschlossenen Glasflasche.

Die Gerste sät man mit 3 x 12 Korn 2 cm tief in eine Standarderde. 7 Tage nach der Aussaat, wenn die jungen Pflanzen ihr erstes Blatt entfaltet haben, werden sie mit Sporen von Erysiphe graminis f.sp. hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Die Ergebnisse dieses Tests gehen aus der nachfolgenden Tabelle hervor.

Tabelle A

Erysiphe-Test Gerste /Saatgutbehandlung

| Wirkstoff | Wirkstoffaufwandmenge in mg/kg Saatgut | Krankheitsbefall in % der unbehandelten Kontrolle |
|---|---|---|
| 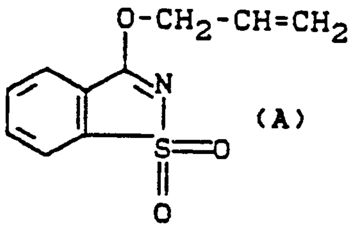 (A) (bekannt) | 2500 | 98,3 |
| 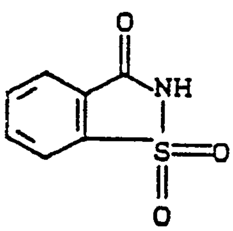 (Ia) | 2500 | 33,3 |
| 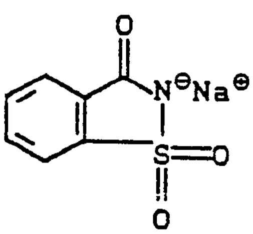 (Ib) | 2000 | 25,0 |

**Ansprüche**

1. Verwendung von Saccharin oder dessen Alkalimetallsalzen der Formel (I)

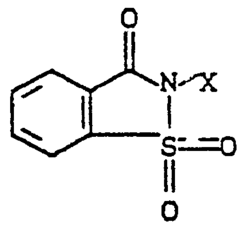

(I)

in welcher

X für Wasserstoff oder ein Alkalimetallkation steht,

als Saatgutbeizmittel für Getreide.

2. Verwendung gemäß Anspruch 1 der Verbindung der Formel

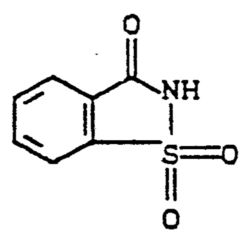

3. Verwendung gemäß Anspruch 1 der Verbindung der Formel

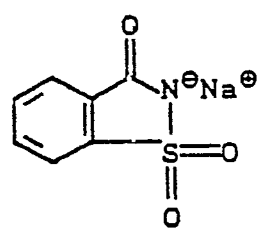

4. Verwendung von Saccharin oder dessen Alkalimetallsalzen der Formel (I) gemäß Anspruch 1 im Konzentrationsbereich von 0,0001 % bis 5 % bezogen auf das zu schützende Saatgut.

5. Verwendung von Saccharin oder dessen Alkalimetallsalzen der Formel (I) gemäß Anspruch 4 im Konzentrationsbereich von 0,001 % bis 1 % bezogen auf das zu schützende Saatgut.

6. Verwendung von Verbindungen der Formel (I) gemäß Anspruch 1, worin das Alkalimetallkation ein Natrium-oder Kaliumkation ist.

Europäisches Patentamt

# EUROPÄISCHER RECHERCHENBERICHT

Nummer der Anmeldung

EP 86 11 2755

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,Y | CENTRAL PATENTS INDEX, BASIC ABSTRACTS JOURNAL, Section C, Woche 8501, 1985, Nr. 85-003525, Derwent Publications Ltd, London, GB; & JP-A-59 204 103 (MITSUI TOATSU CHEM. INC.) 19-11-1984 * Zusammenfassung; Anwendung * --- | 1-6 | A 01 N 43/80 |
| Y | CHEMICAL ABSTRACTS, Band 79, Nr. 21, 26. November 1973, Zusammenfassung Nr. 122557p, Columbus, Ohio, US; & JP-A-73 05 936 (KUMIAI CHEMICAL INDUSTRY CO., LTD) 25-01-1973 (Kat. D) ----- | 1-6 | |
| | | | RECHERCHIERTE SACHGEBIETE (Int. Cl.4) |
| | | | A 01 N |

Der vorliegende Recherchenbericht wurde für alle Patentansprüche erstellt.

| Recherchenort | Abschlußdatum der Recherche | Prufer |
|---|---|---|
| DEN HAAG | 09-01-1986 | DECORTE D. |

KATEGORIE DER GENANNTEN DOKUMENTE

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82